Europäisches Patentamt

European Patent Office

Office européen des brevets

(19)

(11) Veröffentlichungsnummer: **0 130 492**
A2

## (12) EUROPÄISCHE PATENTANMELDUNG

(21) Anmeldenummer: **84107145.9**

(22) Anmeldetag: **22.06.84**

(51) Int. Cl.⁴: **G 02 F 1/137**, G 02 F 1/133

(30) Priorität: **01.07.83 CH 3625/83**

(43) Veröffentlichungstag der Anmeldung: **09.01.85**
**Patentblatt 85/2**

(84) Benannte Vertragsstaaten: **CH DE FR GB LI**

(71) Anmelder: **Videlec AG, Hardstrasse 5, CH-5600 Lenzburg (CH)**

(72) Erfinder: **Leenhouts, Frans, Dr., Schaufelweg 37, CH-3098 Schliern (CH)**
Erfinder: **De Zwart, Maarten, Dr., Rigistrasse 12, CH-5443 Niederrohrdorf (CH)**

(74) Vertreter: **Lück, Gert, Dr. rer. nat., Im See 6, D-7891 Küssaberg 1 (DE)**

(54) **Flüssigkristallanzeige.**

(57) Um einen verbesserten Kontrast bei etwa gleichbleibender Helligkeit der Anzeige zu erreichen, wird bei einer Flüssigkristallanzeige nach dem Drehzellenprinzip der Verdrillungswinkel verringert, werden Polarisatoren mit größerem Löschvermögen verwendet und wird bis zu 3 Gewichtsprozente eines geeigneten Farbstoffes beigemischt. Dadurch wird ebenfalls erreicht, daß die Anzeige weitgehend achromatisch ist.

EP 0 130 492 A2

81/83
1.7.1983
Sp/SC

- 1 -

## Flüssigkristallanzeige

Die Erfindung betrifft eine Flüssigkristallanzeige nach dem Oberbegriff des Patentanspruchs 1.

Eine solche Flüssigkristallanzeige ist z.B. bekannt aus DE-B-31 38 518. Die dort beschriebene Anzeige basiert auf dem Drehzellenprinzip und besteht aus parallelen Trägerplatten, die mit einem Rahmen eine Zelle bildet. In die Zelle ist ein nematischer Flüssigkristall mit positiver dielektrischer Anisotropie eingefüllt. Ueber die auf den Innenseiten der Trägerplatten aufgetragenen Elektrodenschichten sind Orientierungsschichten vorgesehen, die die angrenzenden Flüssigkristallmoleküle einheitlich mit einem geringen Anstellwinkel ausrichten. Die Vorzugsrichtungen der Orientierungsschichten bilden einen Winkel von etwa 70° zueinander. Auf der Frontplatte ist ein Frontpolarisator vorgesehen, dessen Polarisationsachse parallel zur Vorzugsrichtung der angrenzenden Orientierungsschicht verläuft. Auf der Rückplatte ist ein Rückpolarisator vorgesehen, dessen Polarisationsachse senkrecht zur Vorzugsrichtung der angrenzenden Orientierungsschicht verläuft. Der Plattenabstand zwischen den Trägerplatten beträgt 10 $\mu$m und die Brechungsindexanisotropie des Flüssigkristalls ist etwa 0,13.

Die Helligkeit der Anzeige ist im Vergleich zu einer üblichen Drehzellenanzeige bei gleichem Kontrastverhältnis geringer. Aus der Figur 3 dieser Schrift ist entnehmbar, dass die Anzeige trotz allem eine leichte Farbigkeit aufweist, die mit abnehmender Schichtdicke des Flüssigkristalls grösser wird.

Der vorliegenden Erfindung, wie sie in den Patentansprüchen gekennzeichnet ist, liegt die Aufgabe zugrunde, die vorgenannte Flüssigkristallanzeige derart zu verbessern, dass sie eine geringere Farbigkeit und einen erhöhten Kontrast vorweist ohne dass die Helligkeit stark abnimmt.

Die Erfindung beruht auf der Erkenntnis, dass durch ein grösseres Löschvermögen der Polarisatoren in Kombination mit einer Verringerung des Winkels zwischen den Oreintierungsrichtungen und Zufügen eines geringen Anteils an Farbstoff, insbesondere mit einer zur Anzeigefarbe komplementären Spektralfarbe, eine weitgehend farbneutrale Anzeige erreicht wird.

Zu den wichtigsten Vorteilen der Erfindung gehört der verbesserte Kontrast bei etwa gleichbleibender Helligkeit, so dass eine solche Anzeige besonders geeignet ist für die steten Anzeigen in einem Auto, die unter wechselhaften Lichtbedingungen einwandfrei ablesbar sein sollen. Weitere Vorteile der Erfindung folgen aus einem in den Zeichnungen näher erläuterten Beispiel.

Dabei zeigt:

Fig. 1 eine erfindungsgemässe Flüssigkristallanzeige im Querschnitt,

Fig. 2 Graphen im Farbdiagramm zweier verschiedener Anzeigen mit $d \cdot \Delta n$ als Parameter und

Fig. 3 Transmissionkurven für verschiedene Spektralfarben
bei einer erfindungsgemässen Anzeige.

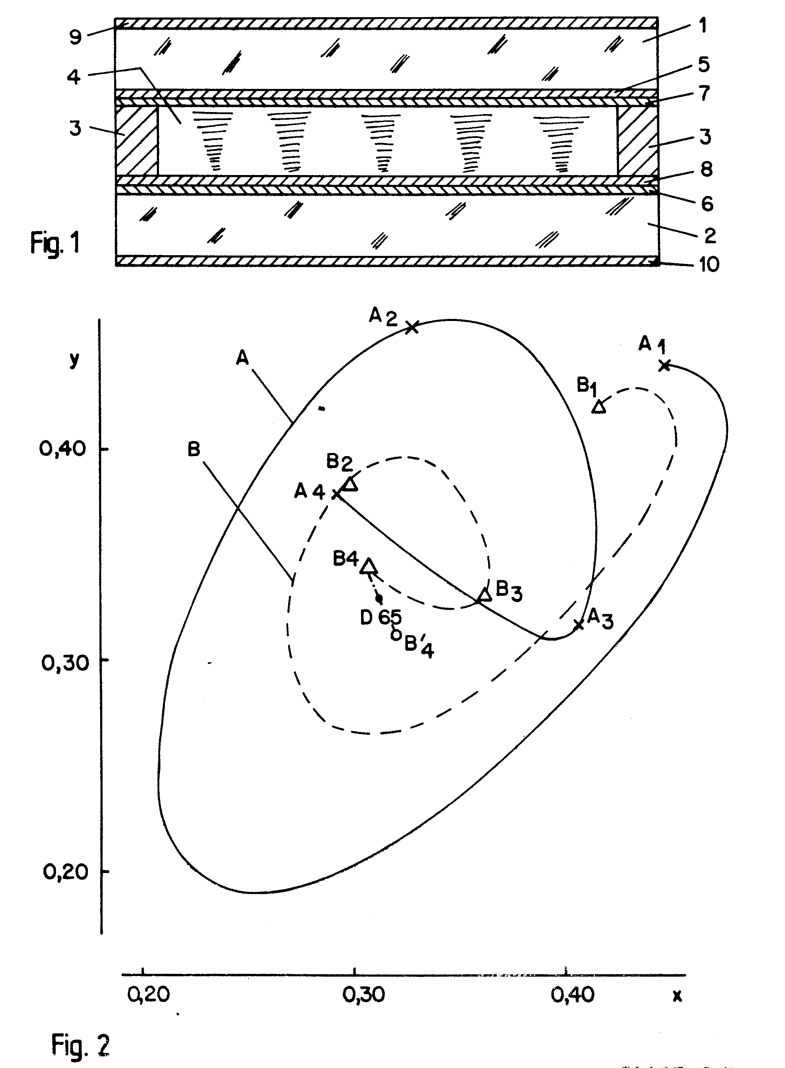

In Fig. 1 ist eine erfindungsgemässe Flüssigkristallanzeige dargestellt. Die Anzeigezelle besteht aus zwei Trägerplatten 1, 2 aus Glas und aus einer Umrandung 3, die wie üblich von im ausgehärteten Epoxy-Klebstoff gehüllten Glasfasern gebildet wird. In die Zelle ist ein nematischer Flüssigkristall 4 mit positiver dielektrischer Anisotropie eingefüllt, insbesondere die Flüssigkristallmischung ZLI 1694 von der Firma Merck, Darmstadt (BRD). Zu diesem Flüssigkristall sind 2 Gewichtsprozente eines dichroitischen Farbstoffes beigemischt. Auf den Trägerplatten 1 und 2 sind Elektrodenschichten 5 und 6 aufgetragen, die in diesem Fall aus Streifen bestehen, so dass eine Punktmatrixanzeige gebildet wird. Es versteht sich, dass auch andere Formen der Elektrodenschichten 5 und 6 gewählt werden können, wie sie z.B. bei einer Siebensegment-Anzeige vorkommen. Ueber die Elektrodenschichten 5 und 6 sind Orientierungsschichten 7 und 8 aus Silan aufgebracht, deren Orientierungsrichtungen einen Winkel $\alpha$ kleiner oder gleich 80° einschliessen. Auf die Aussenseiten der Trägerplatten 1 und 2 sind ein Frontpolarisator 9 und ein Rückpolarisator 10 aufgeklebt, die aus Polaroid-Folien Q 12-35 der Firma Nitto, Japan, bestehen. Die Polarisationsrichtung des Frontpolarisators 9 verläuft parallel zur Orientierungsrichtung der Orientierungsschicht 7, die des Rückpolarisators 10 senkrecht zur Orientierungsrichtung der Orientierungsschicht 8. Die Polarisationsrichtungen der Polarisatoren bilden daher einen Winkel $\beta = 90° - \alpha$, der grösser oder gleich 10° ist. Die Polarisatoren besitzen ein Löschvermögen von 100, das definiert ist als das Verhältnis zwischen der Transmission bei parallelen Polarisatoren und der Transmission bei gekreuzten Polarisatoren.

Dadurch wird schon ein erheblich verbessertes Kontrastverhältnis erreicht im Vergleich zu den üblichen Drehzellen.

Aus der nachstehenden Tabelle sind die Unterschiede in
den Betriebsdaten vier verschiedener Anzeigezellen zu
entnehmen. In die vier Zellen I-IV ist die Flüssigkristallmischung ZLI 1694 eingefüllt, wobei in die Zelle
IV zusätzlich noch 2 Gewichtsprozente eines dichroitischen
Farbstoffes beigemischt sind. Die einzelnen Parameter
in der Tabelle haben die folgende Bedeutung:

$\alpha$   der Winkel zwischen den Orientierungsrichtungen
der Orientierungsschichten (Verdrillungswinkel
des Flüssigkristalls),

d   die Dicke der Flüssigkristallschicht,

$T_o$   die Transmission der Anzeigezelle im nicht-angesteuerten Zustand,

$T_v$   die Transmission der Anzeigezelle im angesteuerten
Zustand, das Löschvermögen oder Kontrastverhältnis der
Anzeigezelle, das gleich dem Verhältnis $T_v/T_o$
ist,

$U_{10,\ 40}$   die Betriebsspannung bei einer Temperatur von
293 K, einer Transmission von 10 % und einem
Sichtwinkel von 40° mit der Normale,

$U_{50,\ 0}$   die Betriebsspannung bei einer Temperatur von
293 K, einer Transmission von 50 % und einem
Sichtwinkel von 0° mit der Normale,

M   das Verhältnis $U_{50,\ 0}/U_{10,\ 40}$, das ein Mass
ist für die Multiplexierbarkeit (vgl. IEEE Trans.
on El. Dev. Vol. ED-21, No. 2 (Febr. 1974),
Seiten 146-155).

Tabelle

| Zelle | I | II | III | IV |
|-------|-----|-----|------|------|
|       | 90° | 90° | 60°  | 60°  |
| d     | 11  | 9   | 9    | 9    |
| $T_0$ | 1,0 | 1,1 | 0,7  | 0,4  |
| $T_v$ | 24,3 | 24,3 | 17,7 | 15,8 |
|       | 24  | 22  | 25   | 40   |
| $U_{10, 40}$ | 1,68 | 1,60 | 1,59 | 1,60 |
| $U_{50, 0}$ | 2,68 | 2,48 | 2,59 | 2,61 |
| M     | 1,60 | 1,55 | 1,63 | 1,63 |

Wie unmittelbar aus der obigen Tabelle ersichtlich ist, besitzt die vierte Anzeigezelle, die den erfindungsgemässen Bedingungen genügt, ein erheblich verbessertes Kontrastverhältnis als die anderen drei Anzeigezellen I bis III ohne dass die Helligkeit gegenüber III stark abgenommen hat.

Die erfindungsgemässe Bedingung für das Produkt aus Schichtdicke und Brechungsindexanisotropie $d \cdot \Delta n$ kann man direkt von der Figur 2 ableiten. Bekanntlich können Farben durch zwei Koordinaten x und y im CIE-Farbdiagramm (1964) charakterisiert werden. Einzelheiten dazu sind aus dem Buch "Color in Business and Industry" von Judd und Wyszecki entnehmbar. Der sogenannte Unbuntpunkt für mittleres Tageslicht, in Figur 2 mit D 65 angedeutet, besitzt dabei die Koordinaten x = 0,313 und y = 0,329. Je weiter ein Punkt in diesem Diagramm von dem Punkt D 65 entfernt ist, desto grösser ist die zugehörige Farbigkeit. Fig. 2 zeigt nun den Zusammenhang zwischen $d \cdot \Delta n$ und Farbe der Anzeige im CIE-Farbdiagramm. Die Kurve A betrifft eine Zelle mit einer Verdrillung des Flüssigkristalls von 90°, die Kurve B eine Zelle mit einer Verdrillung von 45°. Das Produkt $d \cdot \Delta n$ durchläuft dabei die Werte 0,28 $\mu$m ($A_1$, $B_1$), 0,70 $\mu$m

$(A_2, B_2)$, 098 µm $(A_3, B_3)$ und 1,26 µm $(A_4, B_4)$. Wie man sofort der Figur 2 entnehmen kann, ist die Zelle mit einer Verdrillung von 45° (Kurve B) weniger farbig als die Zelle mit einer Verdrillung von 90° (Kurve A). Durch die optimale Wahl des Produkts $d \cdot \Delta n$ und des Verdrillungswinkels des Flüssigkristalls, wird zunächst eine möglichst achromatische Anzeige erzielt. Nähere Untersuchungen haben ergeben, dass der von den Orientierungsrichtungen eingeschlossene Winkel $\alpha$ bevorzugt zwischen 60° und 40° zu liegen hat. Dabei ist zu berücksichtigen, dass ein kleinerer Verdrillungswinkel den Multiplexgrad verringert (vgl. Tabelle). Um eine völlig farbneutrale Anzeige zu erhalten, wird zusätzlich ein Farbstoff bis zu 3 Gewichtsprozenten beigemischt, der das Komplement der Spektralfarbe der Anzeige aufweist. Der Farbpunkt des Farbstoffes (Punkt $B_4'$ in Fig. 2) wird bestimmt durch die Verbindungslinie zwischen dem Farbpunkt der Anzeige (Punkt $B_4$) und dem Unbuntpunkt D 65, wobei die Abstände von den Punkten $B_4$ und $B_4'$ zu diesem Punkt gleich sind.

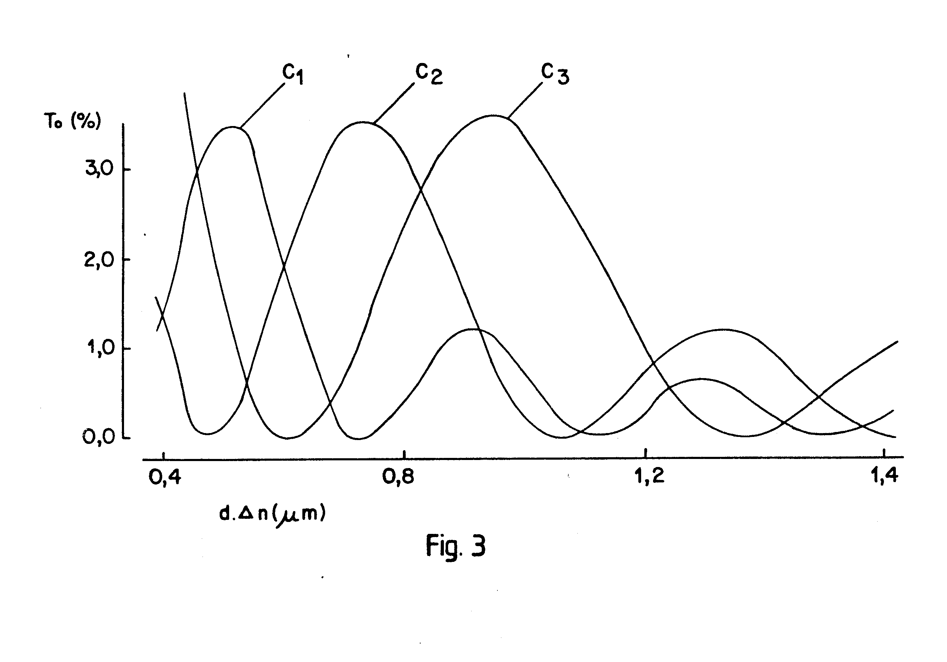

In Figur 3 sind die Transmissionskurven bei drei verschiedenen Spektralfarben mit dem Produkt $d \cdot \Delta n$ als Variable dargestellt. Auf der Ordinate ist der Transmissionskoeffizient $T_0$ (in %) der nicht-angesteuerten Anzeigezelle (dunkel) angegeben. Dabei ist zu bemerken, dass der Transmissionskoeffizient im angesteuerten Zustand (hell) etwa 25 % beträgt. Die erste Kurve $C_1$ ist bei einer Beleuchtung mit blauem Licht (450 nm) aufgenommen, die zweite Kurve $C_2$ mit grünem Licht (550 nm) und die dritte Kurve $C_3$ mit rotem Licht (650 nm). Aus dieser Figur ist ersichtlich, dass die Anzeige bei einem bestimmten Produkt $d \cdot \Delta n$ eine bestimmte Spektralfarbe schlechter absorbiert. Durch Zufügen eines Farbstoffes mit der komplementären Spektralfarbe wird die Absorption des gesamten eingestrahlten Lichts verbessert, und dadurch das Kontrastverhältnis erhöht. Ausserdem erscheint die Anzeige deutlicher, auch wenn die Helligkeit im angesteuerten Zustand in etwa gleichbleibend ist.

<u>P a t e n t a n s p r ü c h e</u>

1. Flüssigkristallanzeige mit
   - zwei parallelen Trägerplatten (1, 2), die mit einer
     Umrandung (3) eine Zelle bilden,
   - einem in die Zelle eingefüllten nematischen Flüssigkristall (4) mit positiver dielektrischer Anisotropie,
   - Elektrodenschichten (5, 6) und darüber liegenden
     Orientierungsschichten (7, 8) auf den Innenseiten
     der Trägerplatten (1, 2), wobei die Orientierungsrichtungen der Orientierungsschichten (7, 8) einen
     Winkel ($\alpha$) kleiner als 80° einschliessen,
   - einem Frontpolarisator (9), dessen Polarisationsrichtung parallel zur Orientierungsrichtung der benachbarten Orientierungsschicht (7) verläuft,
   - einem Rückpolarisator (10), dessen Polarisationsrichtung senkrecht zur Orientierungsrichtung der
     benachbarten Orientierungsschicht (8) verläuft,
   dadurch gekennzeichnet, dass
   - das Löschvermögen der Polarisatoren grösser als 100
     ist,
   - das Produkt von Schichtdicke (d) und Brechungsindex-
     anisotropie ($\Delta n$) des Flüssigkristalls (4) kleiner
     ist als 1,3 $\mu$m, und
   - zu dem Flüssigkristall (4) dichroitischer Farbstoff
     bis zu 3 Gewichtsprozent beigemischt ist.

2. Flüssigkristallanzeige nach Anspruch 1, dadurch gekennzeichnet, dass die Spektralfarbe des beigemischten
   Farbstoffs das Komplement der Spektralfarbe für das
   Produkt von Schichtdicke (d) und Brechungsindexanisotropie ($\Delta n$) des Flüssigkristalls (4) im Farbdiagramm
   CIE 1964 bildet.

3. Flüssigkristallanzeige nach Anspruch 2, dadurch gekennzeichnet, dass der von den Orientierungsrichtungen
eingeschlossene Winkel ( $\alpha$ ) zwischen 60° und 40° liegt.

4. Flüssigkristallanzeige nach Anspruch 2, dadurch gekennzeichnet, dass das Löschvermögen der Polarisatoren
(9, 10) grösser als 1000 ist.

5. Flüssigkristallanzeige nach Anspruch 2, dadurch gekennzeichnet, dass zu dem Flüssigkristall (4) weniger als
2 Gewichtsprozente dichroitischer Farbstoff beigemischt
ist.

Fig. 1

Fig. 2

Fig. 3